# EUROPÄISCHE PATENTSCHRIFT

(11) **EP 3 744 617 B1**
(45) Veröffentlichungstag und Bekanntmachung des Hinweises auf die Patenterteilung: **16.11.2022**
(21) Anmeldenummer: 19176969.4
(22) Anmeldetag: 28.05.2019
(51) Int. Cl.: B62D 21/02

(54) **CHASSIS EINES NUTZFAHRZEUGS MIT LÄNGSTRÄGERN UND QUERTRÄGERN**
CHASSIS OF A COMMERCIAL VEHICLE WITH LONGITUDINAL BEAMS AND CROSS BEAMS
CHÂSSIS D'UN VÉHICULE UTILITAIRE DOTÉ DES LONGERONS ET DES TRAVERSES

(43) Veröffentlichungstag der Anmeldung: 02.12.2020
(73) Patentinhaber: Schmitz Cargobull AG, 48341 Altenberge (DE)
(72) Erfinder: Zimmermann, Stefan, 48565 Steinfurt (DE)
(74) Vertreter: Cohausz & Florack

(56) Entgegenhaltungen:
- EP-A1- 3 239 021
- WO-A1-2017/210096
- GB-A- 2 540 531

## Beschreibung

Die Erfindung betrifft ein Chassis eines Nutzfahrzeugs, insbesondere Lastkraftwagens, Anhängers oder Sattelaufliegers, mit einem vorderen Ende, einem hinteren Ende und zwei Seitenrändern, wobei wenigstens zwei sich wenigstens im Wesentlichen in Fahrtrichtung erstreckende Längsträger vorgesehen sind, wobei wenigstens ein sich quer zur Fahrtrichtung erstreckender Querträger vorgesehen ist, wobei sich der wenigstens eine Querträger von einem zentralen Abschnitt zwischen den wenigstens zwei Längsträgern bis in wenigstens einen Randabschnitt zwischen einem Seitenrand und dem dem Seitenrand zugeordneten Längsträger erstreckt, wobei der wenigstens eine Querträger von dem zentralen Abschnitt in den Randabschnitt wenigstens teilweise durch eine Ausnehmung des dem Randabschnitt zugeordneten Längsträgers hindurchgreift.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Chassis, ein mit dem Chassis verbundenes Fahrwerk und ein von dem Chassis getragenen Aufbau auf, welche der Aufnahme der zu transportierenden Ladung in einem Laderaum dienen. Chassis von Nutzfahrzeugen sind dabei beispielsweise aus der GB 2 540 531 A und der WO 2017/210096 A1 bekannt. So sind beispielsweise Planenaufbauten bekannt, die wenigstens eine Plane zum Verschließen wenigstens einer Seite und/oder eines Dachs des Planenaufbaus aufweisen. Wenn die Plane entlang der Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Auch die Stirnwand ist bei Kofferaufbauten typischerweise als feste Wand ausgebildet, wohingegen die Rückwand meist durch zwei Flügeltüren, ein Rolltor oder dergleichen gebildet wird, um den Laderaum darüber von hinten beladen zu können. Die Seitenwände, das Dach, die Stirnwand sowie bedarfsweise der Boden von Kofferaufbauten sind in der Regel in Form von mehrschichtigen Paneelen aufgebaut, die äußere strukturgebende Decklagen und dazwischen eine Kernlage aus geschäumtem Kunststoff umfassen. Die Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und aufgrund des geschäumten Kunststoffs eine hohe thermische Isolation bereitstellen, sind Kofferaufbauten in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten Kühltransport, geeignet.

Bei den bekannten Nutzfahrzeugen ist typischerweise im oberen Bereich des Chassis und im unteren Bereich des Aufbaus ein Ladeboden vorgesehen. Dabei kann der Ladeboden entweder als Teil des Chassis oder als Teil des Aufbaus angesehen werden. Gleiches gilt für den sogenannten Bodenrahmen, der meist durch umlaufend vorgesehene Bodenrahmenprofile gebildet wird und der den äußeren Rand des Laderaums bilden kann. Der Ladeboden wird dabei bedarfsweise aus Holz oder aus Aluminium gebildet, wobei im Falle von Holz an der Unterseite meist eine Decklage aus Metall vorgesehen ist. Im Falle von Kühlkofferaufbauten kann zwischen der unteren Decklage und der Oberfläche des Ladebodens noch eine Kernlage aus geschäumtem Kunststoff vorgesehen sein. Der Ladeboden wird nicht nur durch die Ladung selbst belastet, sondern auch oftmals mit Staplern befahren, die lokal sehr hohe Gewichtskräfte auf den Ladeboden übertragen. Diese Gewichtskräfte müssen vom Ladeboden zuverlässig an das Chassis abgeleitet werden.

Die Chassis der bekannten Nutzfahrzeuge weisen typischerweise eine Gitterrahmenstruktur aus jeweils mehreren Längsträgern und Querträgern auf, die auch als Leiterrahmenstruktur bezeichnet werden. Auf diese Weise steifen die Chassis das Nutzfahrzeug aus und leiten die Kräfte des Aufbaus an das Fahrwerk und im Falle eines Sattelaufliegers an die Zugmaschine ab. Die in der Praxis verwendeten Gitterrahmenstrukturen sind je nach Art des Nutzfahrzeugs recht unterschiedlich ausgebildet. Die Chassis weisen dabei ein mehr oder weniger klar abgegrenztes vorderes Ende und ein ebenfalls mehr oder weniger abgegrenztes hinteres Ende auf. Dabei ist das vordere Ende in Fahrtrichtung vorne und das hintere Ende in Fahrtrichtung hinten vorgesehen. Mit anderen Worten definieren das vordere und das hintere Ende die Fahrtrichtung des Chassis, und zwar insbesondere für den Fall, dass das Chassis geradeaus und nicht um eine Kurve fährt. Auch die Seitenränder, die wenigstens im Wesentlichen parallel zur Fahrtrichtung ausgerichtet sein können, können mehr oder weniger klar abgegrenzt sein. Dabei sind die Längsträger wenigstens im Wesentlichen parallel zur Fahrtrichtung ausgerichtet, während sich die Querträger quer dazu, insbesondere wenigstens im Wesentlichen senkrecht zur Fahrtrichtung bzw. zu den Längsträgern erstrecken.

Die Längsträger verlaufen regelmäßig in einem gewissen Abstand zu den Seitenrändern des Chassis, so dass die Längsträger Randabschnitte zwischen dem jeweils äußeren Längsträger und dem zugehörigen Seitenrand des Chassis definieren. Zwischen den Randabschnitten erstreckt sich dann ein zentraler Abschnitt. Da typischerweise zwei Längsträger in einem Chassis vorgesehen werden, ist der zentrale Abschnitt dann vereinfacht gesprochen zwischen den beiden Längsträgern angeordnet. Die Querträger wiederum sind sowohl im Randabschnitt als auch im zentralen Abschnitt vorgesehen. Zudem können die Querträger einstückig ausgebildet sein und sich von einem Randabschnitt durch eine Aussparung in einem Längsträger in den zentralen Abschnitt und von dort durch eine weitere Aussparung in den gegenüberliegenden Randabschnitt erstrecken. Mit anderen Worten greifen die Querträger in ihrer Längserstreckung bedarfsweise durch Ausnehmungen der Längsträger hindurch.

Bei der Ausgestaltung der Chassis stehen sich grundsätzliche, meist widerstreitende Anforderungen gegenüber. So soll der Materialeinsatz zur Fertigung des Chassis minimiert werden, um Materialkosten und Gewicht einzusparen. Andererseits sollen die Chassis seht stabil, steif und langlebig sein. Nicht zuletzt sollen die Chassis auch so konstruiert sein, dass sie sich einfach und schnell fertigen lassen, um Fertigungskosten einzusparen. Die bisherigen Lösungen werden diesen umfangreichen und teilweise widerstrebenden Anforderungen noch nicht in einem zufriedenstellenden Maße gerecht, jedenfalls für einige Anwendungen und Nutzfahrzeugarten.

Daher liegt der vorliegenden Erfindung die Aufgabe zugrunde, das eingangs genannte und zuvor näher beschriebene Chassis derart auszugestalten und weiterzubilden, dass ein stabiles, steifes, langlebiges und leichtes Chassis zu geringen Kosten gefertigt werden kann.

Diese Aufgabe ist bei einem Chassis nach dem Oberbegriff von Anspruch 1 dadurch gelöst, dass die über die Längserstreckung des wenigstens einen Querträgers im Randabschnitt gemittelte Höhe des wenigstens einen Querträgers im Randabschnitt oberhalb der über die Längserstreckung des wenigstens einen Querträgers im zentralen Abschnitt gemittelten Höhe des Querträgers im zentralen Abschnitt angeordnet ist.

Auf diese Weise wird ein Chassis mit wenigstens einem Querträger bereitgestellt, der im zentralen Abschnitt deutlich tiefer angeordnet sein kann als im Randabschnitt. Es kommt jedoch nicht zwingend darauf an, dass der Querträger im zentralen Abschnitt niedriger angeordnet ist als die niedrigste Stelle des Querträgers im Randabschnitt. Gelichfalls muss der Querträger weder im Randabschnitt noch im zentralen Abschnitt eine gleichbleibende Höhe aufweisen.

Die entsprechende Ausgestaltung des wenigstens einen Querträgers erlaubt beispielsweise eine sehr zweckmäßige Anbindung von Zusatzelementen oder Fahrwerksteilen an dem Chassis im zentralen Bereich, ohne den Nachteil eines auch im Randbereich abgesenkten Querträgers oder eines mehrteiligen Querträgers in Kauf nehmen zu müssen. Bei mehrteiligen Querträgern ist der Querträger typischerweise im zentralen Abschnitt und in den Randabschnitten aus separaten Teilen gebildet, die jeweils mit einem Längsträger verbunden sind. Dies ist in der Fertigung aufwendig und hinsichtlich der Steifigkeit des Querträgers nachteilig. Zudem wird es so möglich, den Ladeboden im zentralen Abschnitt nicht direkt auf dem Querträger abzustützen sondern über zusätzliche Elemente indirekt auf dem Querträger abzustützen. Hierin wäre grundsätzlich eher ein Nachteil zu sehen, allerdings hat sich gezeigt, dass der Querträger auf die beschriebene Weise leichter gefertigt werden kann. Zudem können auch die entsprechenden zusätzlichen Elemente recht leicht ausgebildet werden, so dass es trotz der zusätzlichen Elemente zu einer Gewichtsreduzierung des Chassis insgesamt kommen kann. Ferner wird so eine sehr zweckmäßige Ableitung der Kräfte aus dem jeweiligen Aufbau und dem jeweiligen Ladeboden möglich, was zu einer steiferen, stabileren und langlebigeren Struktur des Chassis führen kann.

Des Weiteren ist zu berücksichtigen, dass die Vorteile bei einem Querträger der genannten Art eher noch stärker ausgeprägt sein werden, wenn der Querträger in beiden Randbereichen analog ausgebildet ist. Alternativ oder zusätzlich kommt es auch zu einer Verstärkung der vorteilhaften Effekte, wenn mehr als nur ein Querträger, nämlich mehrere Querträger, bedarfsweise wenigstens im Wesentlichen alle Querträger des Chassis entsprechend ausgebildet sind.

Bei einer ersten besonders bevorzugten Ausgestaltung des Chassis ist die Höhe des wenigstens einen Querträgers im Randabschnitt angrenzend zu dem dem Randabschnitt zugeordneten Längsträger niedriger angeordnet als die über die Längserstreckung des wenigstens einen Querträgers im Randabschnitt gemittelte Höhe des wenigstens einen Querträgers im Randabschnitt. Mit anderen Worten sinkt der Querträger im Bereich des Längsträgers ab, was zu einer stabilen Ausgestaltung des Querträgers führt, der mithin hohe Kräfte bei geringem Gewicht ableiten kann. Gleiches gilt alternativ oder zusätzlich, wenn die Höhe des wenigstens einen Querträgers im zentralen Abschnitt angrenzend zu dem dem Randabschnitt zugeordneten Längsträger höher angeordnet ist als die über die Längserstreckung des wenigstens einen Querträgers im zentralen Abschnitt gemittelte Höhe des wenigstens einen Querträgers im zentralen Abschnitt. Dann steigt der Querträger angrenzend zum Längsträger an. Dabei ist insbesondere die Kombination aus einem Absinken nach innen und einem Ansteigen nach außen geeignet, um in zweckmäßiger Weise einen Übergang von dem niedrigeren zentralen Abschnitt zu dem höheren Randabschnitt bereitzustellen, ohne dass es dabei zu übermäßigen Spannungsspitzen und damit zu einer Schwächung des Querträgers kommt.

Aus Gründen der Steifigkeit ist es grundsätzlich bevorzugt, wenn der wenigstens eine Querträger im Randabschnitt angrenzend zu dem dem Randabschnitt zugeordneten Längsträger in Richtung des dem Randabschnitt zugeordneten Längsträgers gesehen, insbesondere mit einer stetigen Krümmung, nach unten gebogen ist. So wird ein bevorzugter, den Querträger schonender Kraftfluss erreicht. Gleiches gilt alternativ aber insbesondere auch zusätzlich, wenn der wenigstens eine Querträger im zentralen Abschnitt angrenzend zu dem dem Randabschnitt zugeordneten Längsträger in Richtung des dem Randabschnitt zugeordneten Längsträgers gesehen, insbesondere mit einer stetigen Krümmung, nach oben gebogen ist.

Für die zweckmäßige Abstützung des Ladebodens des Nutzfahrzeugs unter einer Einsparung von Gewicht ist es nicht nur zweckmäßig, wenn der Querträger im zentralen Abschnitt prinzipiell unterhalb des Querträgers im Randanschnitt angeordnet ist. Es ist grundsätzlich weiter zweckdienlich, wenn der obere Rand des wenigstens einen Querträgers im zentralen Abschnitt wenigstens im Wesentlichen unterhalb des oberen Rands wenigstens eines der Längsträger angrenzend zum wenigstens einen Querträger angeordnet ist. Dabei ist der angrenzende Teil des Längsträgers insbesondere aber nicht zwingend ausschließlich der Teil des Längsträgers, durch den der Querträger hindurchgeführt ist. Im Randabschnitt ist eine indirekte Abstützung des Bodens weniger vorteilhaft nutzbar, weshalb es hier zur Einsparung von weiteren Bauteilen bevorzugt ist, wenn der obere Rand des wenigstens einen Querträgers im Randabschnitt wenigstens abschnittweise wenigstens im Wesentlichen auf derselben Höhe wie der obere Rand wenigstens eines der Längsträger angrenzend zum wenigstens einen Querträger angeordnet ist. So kann der Querträger im Randabschnitt direkt der Abstützung dienen und/oder konstruktiv einfach mit einem Bodenrahmen oder weiteren Funktionsbauteilen verbunden sein.

Aus statischen Gründen kann der wenigstens eine Querträger am oberen Rand einen Obergurt aufweisen, wobei der Obergurt gleichzeitig wenigstens im Wesentlichen den oberen Rand des Querträgers bilden kann, und zwar im zentralen Abschnitt und alternativ oder zusätzlich auch im wenigstens einen Randabschnitt. Aus demselben Grund kann der obere Rand des wenigstens einen Längsträgers einen Obergurt aufweisen, wobei der Obergurt dann wenigstens im Wesentlichen den oberen Rand des Längsträgers bilden kann.

Zur Aussteifung und Stabilisierung des Ladebodens des Nutzfahrzeugs kann es zweckmäßig sein, wenn wenigstens ein Ende des wenigstens einen Querträgers mit einem Bodenrandelement, insbesondere einem Bodenrahmenprofil, verbunden, insbesondere verschraubt, ist. Alternativ oder zusätzlich ist es zur Aussteifung des Chassis zur besseren Ableitung der Kräfte an das Fahrwerk und bedarfsweise an die Zugmaschine zweckdienlich, wenn der wenigstens eine Querträger mit wenigstens einem Längsträger, insbesondere über eine Verbindungskonsole, verschraubt ist.

Aus statischen Gründen ist es zudem grundsätzlich bevorzugt, wenn der wenigstens eine Querträger wenigstens im Wesentlichen als I-Profil ausgebildet ist. Aus demselben Grund kann es alternativ oder zusätzlich wünschenswert sein, wenn der Querschnitt des wenigstens einen Querträgers wenigstens im Wesentlichen in Form eines Doppel-T-Trägers ausgebildet ist.

Insbesondere zur Abstützung eines Ladebodens und zur Verteilung der darüber abzuleitenden Kräfte ist es bedarfsweise angebracht, wenn auf dem wenigstens einen Querträger, insbesondere auf dem oberen Rand des Querträgers, im zentralen Abschnitt wenigstens ein sich wenigstens im Wesentlichen in Fahrtrichtung erstreckender Hilfslangträger aufliegt. Dabei kommt der entsprechende Vorteil insbesondere dann zum Tragen, wenn mehrere Hilfslangträger auf dem wenigstens einen Querträger abgestützt sind. Alternativ oder zusätzlich ist es zur Verteilung der Kräfte im Chassis zweckmäßig, wenn der wenigstens eine Hilfslangträger auf mehreren Querträgern aufliegt. Dabei ist es konstruktiv und fertigungstechnisch bevorzugt, wenn der obere Rand des wenigstens einen Hilfslangträgers wenigstens abschnittsweise wenigstens im Wesentlichen auf derselben Höhe angeordnet ist wie der in Querrichtung neben dem Abschnitt des Hilfslangträgers angeordnete Abschnitt wenigstens eines Längsträgers. Hierbei sind die Hilfslangträger von den Längsträgern zu unterscheiden. Die Längsträger sind bevorzugt weitaus massiver ausgebildet als die Hilfslangträger. Außerdem tragen die Längsträger wenigstens teilweise die Querträger, während die Hilfslangträger von den Querträgern getragen werden. Zudem sind die Längsträger und die Querträger bevorzugt fest miteinander verbunden, insbesondere verschraubt, während die Längsträger lediglich, bedarfsweise formschlüssig, auf den Querträgern aufliegen können.

Des Weiteren bietet es sich zur Einsparung von Gewicht an, wenn der wenigstens eine Hilfslangträger wenigstens im Wesentlichen als offenes Profil ausgebildet ist. Dabei bietet es sich aus statischen Gründen insbesondere an, wenn der wenigstens eine Hilfslangträger wenigstens im Wesentlichen als, insbesondere nach unten offenes, Hutprofil ausgebildet ist.

Damit eine zuverlässige Ableitung von Kräften aus dem Ladeboden in die Querträger erreicht werden kann, ohne den Hilfslangträger aus Gewichtsgründen übermäßig massiv ausbilden zu müssen, kann im wenigstens einen Hilfslangträger im Bereich des wenigstens einen Querträgers ein den freien Querschnitt des wenigstens einen Hilfslangträgers in vertikaler Richtung auffüllendes Stützelement zum Übertragen von Druckkräften eines auf dem wenigstens einen Hilfslangträger aufliegenden Ladebodens auf den wenigstens einen Querträger vorgesehen sein. Dann übernimmt die Weiterleitung der Kräfte vom Ladeboden an den wenigstens einen Querträger bedarfsweise wenigstens im Wesentlichen das wenigstens eine Stützelement. Im Ergebnis kann der Hilfslangträger so weitgehend entlastet werden, dass trotz der zusätzlichen Verwendung des Stützelements eine Gewichtseinsparung erreicht werden kann. Dies ist insbesondere der Fall, wenn das Stützelement gegenüber dem Hilfslangträger nach unten und/oder nach oben vorsteht. Auf diese Weise kann der Hilfslangträger in diesem Bereich weiter entlastet werden. Auch kann so eine gewisse Kompression des Stützelements zugelassen werden, ohne dass es zu einer gegebenenfalls irreversiblen Verformung des wenigstens einen Hilfslangträgers kommen kann. Insbesondere kann so ein unerwünschtes Knicken des Hilfslangträgers im Bereich des Querträgers vermieden werden.

Zur Schonung des Hilfslangträgers vor einer nachhaltigen Beschädigung bei trotzdem sicherer Ableitung der beispielsweise durch einen Stapler in den Ladeboden eingeleiteten Kräfte ist es zweckmäßig, wenn der Ladeboden auf dem Stützelement aufliegt und von dem Hilfslangträger vertikal beabstandet ist. Alternativ oder zusätzlich kann das Stützelement auf dem wenigstens einen Querträger aufliegen und der Querträger von dem Hilfslangträger vertikal beabstandet sein. Es wird so ein entsprechender Abstand zwischen dem Querträger und/oder dem Ladeboden bereitgestellt, der für eine gewisse Kompression des Stützelements unter Last genutzt werden kann.

Zur sicheren Ableitung der Kräfte vom Ladeboden an den wenigstens einen Querträger bei gelichzeitig geringem Gewicht bietet es sich auch an, wenn das Stützelement aus einem Kunststoff und/oder Holz gebildet ist. Zur Stabilisierung und Aussteifung des Hilfslangträgers bietet es sich dagegen insbesondere an, wenn der Hilfslangträger aus einem Blech, insbesondere aus Stahl, umgeformt ist.

Unabhängig davon kann das Chassis einen Ladeboden umfassen, wobei der Ladeboden dann auf einem Bodenrahmenprofil, dem wenigstens einen Querträger, wenigstens einem Längsträger und/oder dem wenigstens einen Hilfslangträger aufliegt. Über jedes der Bauteile können dann bedarfsweises an verschiedenen Stellen Kräfte vom Ladeboden abgeleitet werden. Daher bietet es sich besonders an, wenn der Ladeboden an all den genannten Bauteilen aufliegt. Insbesondere kann der Ladeboden im Randabschnitt auf dem wenigstens einen Querträger aufliegen, um dort der Einfachheit halber Kräfte direkt in den Querträger einzuleiten.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Chassis in einer perspektivischen Ansicht,
- Fig. 2: einen Teil des Chassis aus der Fig. 1 in einer perspektivischen Ansicht,
- Fig. 3: ein Detail des Teils des Chassis aus der Fig. 1 in einer Ansicht von vorne und
- Fig. 4: ein Detail des Chassis aus Fig. 1 im Bereich eines Hilfslangträgers in einer Ansicht von vorne.

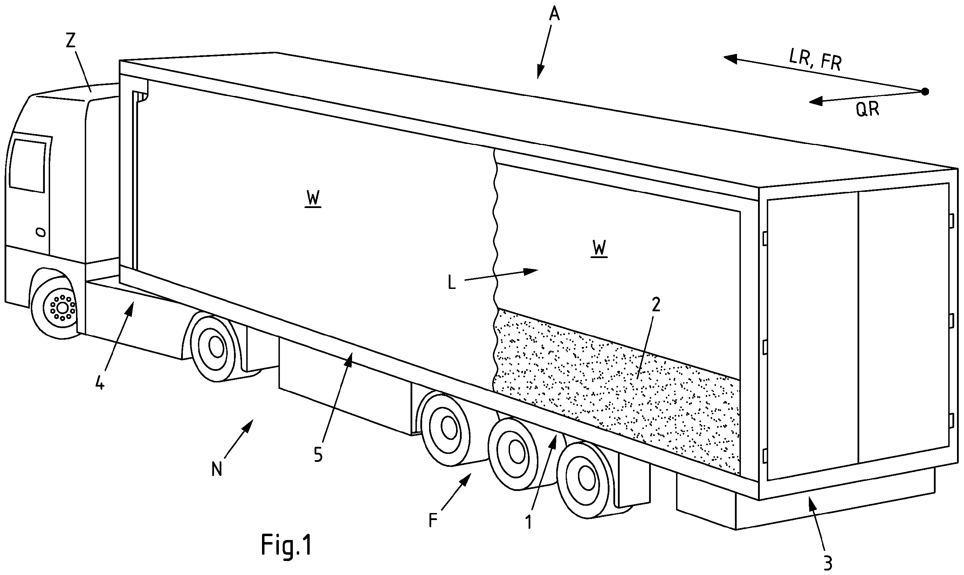

In der Fig. 1 ist ein von einer Zugmaschine Z gezogenes Nutzfahrzeug N in Form eines Sattelaufliegers in einer perspektivischen Ansicht dargestellt. Das Nutzfahrzeug N weist einen Nutzfahrzeugaufbau A auf, der bei dem dargestellten und insoweit bevorzugten Nutzfahrzeug N als Planenaufbau ausgebildet ist, aber alternativ auch als Kofferaufbau ausgebildet sein könnte. Das Nutzfahrzeug N stützt sich vorne auf der Zugmaschine Z und hinten über das vorliegend dreiachsig ausgebildete Fahrwerk F ab, das mit einem Chassis 1 verbunden ist, welches seinerseits den Nutzfahrzeugaufbau A trägt. Das dargestellte und insoweit bevorzugte Chassis 1 umfasst zudem den Ladeboden 2 des Nutzfahrzeugaufbaus A, der den Laderaum L des Nutzfahrzeugaufbaus A nach unten begrenzt und dem Aufstellen von in dem Laderaum L zu transportierender Ladung dient.

Das Chassis 1 erstreckt sich in der Fahrtrichtung FR bzw. der Längsrichtung LR des Nutzfahrzeugs N von einem hinteren Ende 3 des Chassis 1, das bei dem dargestellten und insoweit bevorzugten Nutzfahrzeug N wenigstens im Wesentlichen mit dem hinteren Ende des Nutzfahrzeugaufbaus A zusammenfällt, bis zu einem vorderen Ende 4 des Chassis 1, das bei dem dargestellten und insoweit bevorzugten Nutzfahrzeug N wenigstens im Wesentlichen mit dem vorderen Ende des Nutzfahrzeugaufbaus A zusammenfällt. Die Seitenränder 5 des Chassis 1 erstrecken sich bei dem dargestellten und insoweit bevorzugten Nutzfahrzeug N in Fahrtrichtung FR und etwa im Bereich der Seitenwände W des Nutzfahrzeugaufbaus A.

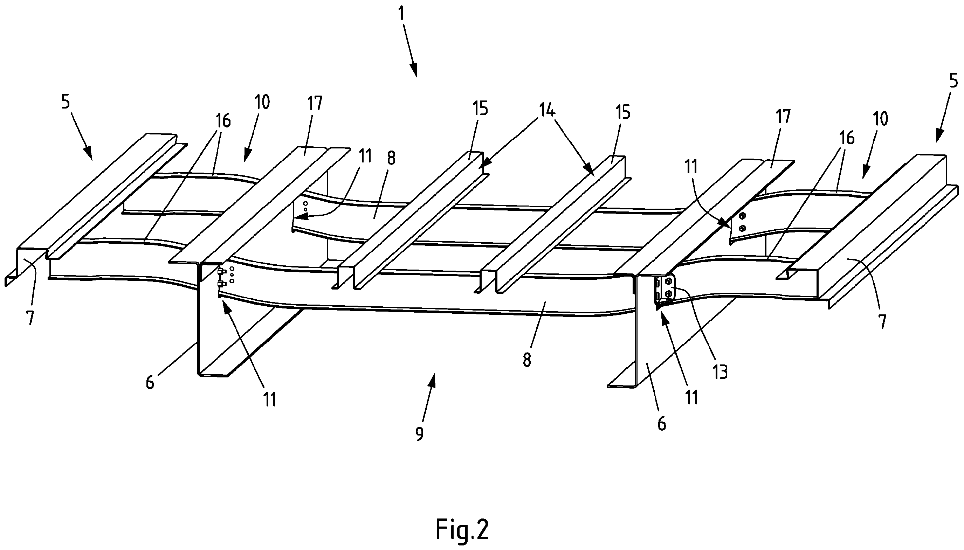

In der Fig. 2 ist ein Teil des Chassis 1 in einer perspektivischen Ansicht dargestellt, wobei das vordere Ende 4 und das hintere Ende 3 des Chassis 1 nicht dargestellt sind. Das Chassis 1 umfasst zwei sich parallel zur Fahrtrichtung erstreckende Längsträger 6, die sich bei dem dargestellten und insoweit bevorzugten Chassis 1 vom vorderen Ende 4 bis hin zum hinteren Ende 3 des Chassis 1 erstrecken. Zudem sind die beiden Längsträger 6 in einer Richtung QR quer zum Nutzfahrzeug N voneinander beabstandet angeordnet. Der Querschnitt der dargestellten und insoweit bevorzugten Längsträger 6 ist dabei S-förmig ausgebildet. Zudem handelt es sich bei den dargestellten Längsträgern 6 um solche in Form eines rollierten Profils. Grundsätzlich sind jedoch auch andere Querschnitte, beispielsweise I-förmige, Z-förmige oder C-förmige Querschnitte denkbar.

Die beiden Längsträger 6 sind zudem beabstandet zu zwei seitlichen, als Bodenrahmenprofile ausgebildeten, Bodenrandelementen 7 des Chassis 1 angeordnet. Die Bodenrandelemente 7 bilden die Seitenränder 5 des Chassis 1 und erstrecken sich wenigstens im Wesentlichen parallel zu den Längsträgern des Nutzfahrzeugs N und zur Fahrtrichtung FR. Die Bodenrandelemente 7 und die Längsträger 6 sind durch eine Reihe von sich senkrecht zur Fahrtrichtung FR, also quer zu den Längsträgern 6 und dem Nutzfahrzeug N, erstreckenden Querträgern 8 miteinander verbunden, von denen in der Fig. 2 zwei dargestellt sind. Dabei werden die Querträger 8 durch die Längsträger 6 in unterschiedliche Abschnitte unterteilt, nämlich einen zentralen Abschnitt 9 zwischen den beiden Längsträgern 6 und zwei Randabschnitte 10 zwischen jeweils dem äußeren Längsträger 6 und dem zugeordneten Bodenrandelement 7. Dabei erstrecken sich die Querträger 8 zudem ohne Unterbrechung durch Ausnehmungen 11 der Längsträger 6 hindurch. Die Querträger 8 sind also einteilig, insbesondere einstückig ausgebildet. Zudem sind die Querträger 8 über entsprechende Verbindungskonsolen 12,13 mit den Bodenrandelementen 7 und mit den Längsträgern 6 verschraubt. Alternativ können die Querträger 8 jedoch auch direkt mit den Bodenrandelementen 7 und/oder den Längsträgern 6 verschraubt sein.

Das Chassis 1 weist weiterhin zwei sich parallel zur Fahrtrichtung FR erstreckende Hilfslangträger 14 auf. Die Hilfslangträger 14 sind zwischen den Längsträgern 6 sowie beabstandet voneinander und von den Längsträgern 6 angeordnet. Dabei liegen die Hilfslangträger 14 auf den oberen Rändern der zentralen Abschnitte 9 der Querträger 8 auf und stützen sich auf diesen ab. Die Hilfslangträger 14 sind beim dargestellten und insoweit bevorzugten Chassis 1 jeweils wenigstens im Wesentlichen als Hutprofile 15 ausgebildet. Dabei sind die Hutprofile 15 nach unten, also in Richtung der Querträger 8, offen. Anstatt eines Hutprofils 15 können die Hilfslangträger 14 jedoch auch wenigstens im Wesentlichen als Profil mit einem anderen Querschnitt, etwa als I-Profil, C-Profil oder ein S-Profil, oder als Vollprofil ausgebildet sein. Auch geschlossene, insbesondere Hohlprofile sind denkbar, aber grundsätzlich weniger bevorzugt.

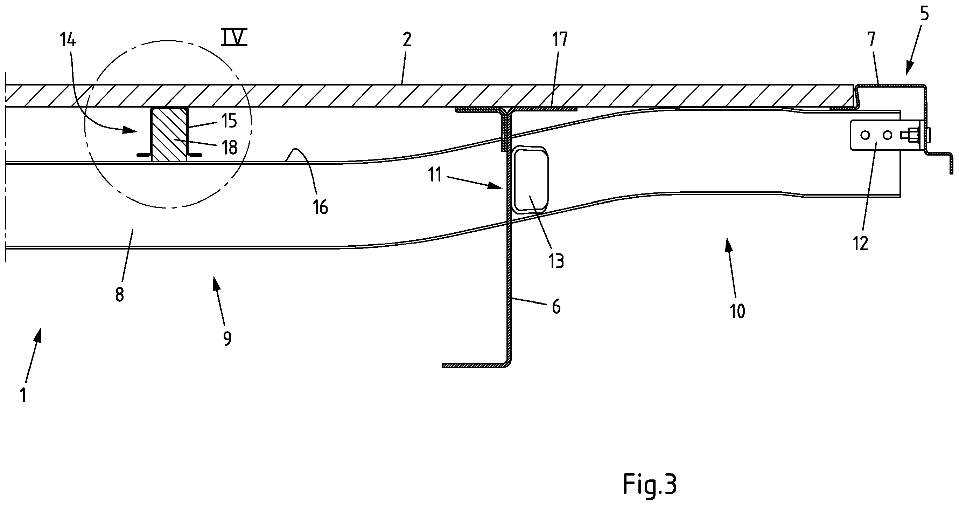

In der Fig. 3 ist der mittlere Teil des Chassis 1 aus der Fig. 2 im Bereich des rechten Rands im Detail inklusive des Ladebodens 2 dargestellt. Der dargestellte und insoweit bevorzugte Ladeboden 2 ist aus Holz gebildet und liegt an seinem seitlichen Rand auf dem Bodenrandelement 7 in Form des Bodenrahmenprofils auf. Das dargestellte und insoweit bevorzugte Bodenrandelement 7 ist dabei über eine Konsole 12 mit dem Querträger 8 verschraubt. Der Ladeboden 2 liegt zudem abschnittsweise auf dem Querträger 8 im Randabschnitt 10, auf dem Längsträger 6 und dem Hilfslangträger 14 auf. Zudem liegt das Bodenrandelement 7 auf dem Querträger 8 auf

Der Querträger 8 ist im Randabschnitt 10 höher angeordnet als im zentralen Abschnitt 9. Wird die Höhe des oberen Rands des Querträgers 8 im Randabschnitt 10 einerseits und im zentralen Abschnitt 9 andererseits jeweils entlang der Längserstreckung des Querträgers 8 im entsprechenden Abschnitt 9,10 gemittelt, ergibt sich eine nennenswerte Höhendifferenz zwischen diesen beiden gemittelten Höhen. Die Höhendifferenz kann dabei wenigstens 3 cm, vorzugsweise wenigstens 5 cm, insbesondere wenigstens 7 cm, betragen. Da der Querträger 8 durch die Längsträger 6 hindurchgesteckt ist, nähern sich der zentrale Abschnitt 9 und der Randabschnitt 10 des Querträgers 8 in Richtung des jeweiligen Längsträgers 6 an. Der Bereich des Randabschnitts 10 angrenzend zu dem jeweiligen Längsträger 6 ist dabei tiefer angeordnet als der Rest des Randabschnitts 10, jedenfalls als die über die Längserstreckung des Querträgers 8 im Randbereich 10 gemittelte Höhe. Bei dem zentralen Abschnitt 9 des Querträgers 8 ist der Bereich angrenzend zu dem jeweiligen Längsträger 6 dagegen höher angeordnet als der mittlere Bereich des zentralen Abschnitts 9 bzw. der übrige Bereich des zentralen Abschnitts 9, insbesondere die über die Längserstreckung des Querträgers 8 im zentralen Abschnitt 9 gemittelte Höhe. Diese Ausgestaltung wird erreicht, indem der Randabschnitt 10 angrenzend zum entsprechenden Längsträger 6 in Richtung des Längsträgers 6 gesehen nach unten gebogen ist, währen der zentrale Abschnitt 9 des Querträgers 8 angrenzend zum entsprechenden Längsträger 6 in Richtung des entsprechenden Längsträgers 6 gesehen nach oben gebogen ist. Die Krümmungen sind dabei vorzugsweise stetig ausgebildet. Auf diese Weise wird im Bereich eines Längsträgers 6 ein doppelt gekröpfter Querträger 8 erhalten.

Der obere Rand des Querträgers 8 wird wie die oberen Ränder der Längsträger 6 aus einem Obergurt 16,17 gebildet. Der Obergurt 16 des Querträgers 8 ist dabei im Randbereich 10 abschnittsweise wenigstens im Wesentlichen auf derselben Höhe angeordnet wie die Obergurte 17 der Längsträger 6 im Bereich des Querträgers 8. Die Längsträger 6 und der Querträger 8 sind über Verbindungskonsolen 13 miteinander verschraubt. Zwischen dem zentralen Abschnitt 9 des Querträgers 8 und dem Ladeboden 2 sind Hilfslangträger 14 vorgesehen, die den jeweiligen Spalt zwischen dem Ladeboden 2 und dem zentralen Abschnitt 9 des Querträgers 8 ausfüllen. Dementsprechend liegt der Ladeboden 2 auf den Hilfslangträgern 14 auf und liegen die Hilfslangträger 14 auf dem Querträger 8 auf. Der obere Rand des Hilfslangträgers 14 ist mithin wenigstens im Wesentlichen auf einer Höhe mit dem oberen Rand des Längsträgers 6 im Bereich des Querträgers 8 und abschnittsweise wie der obere Rand des Querträgers 8 im Randabschnitt 10 angeordnet.

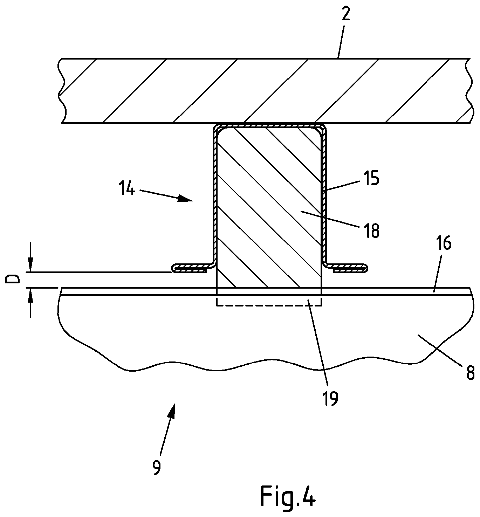

Das Chassis 1 im Bereich eines Hilfslangträgers 14 ist in der Fig. 4 im Detail dargestellt. Der dargestellte und insoweit bevorzugte Hilfslangträger 14 ist in Form eines nach unten offenen Hutprofils 15 ausgebildet, in das im Bereich des Querträgers 8 ein Stützelement 18 eingesetzt ist. Das Stützelement 18 füllt den freien Querschnitt des Hutprofils 15 wenigstens im Wesentlichen aus. Dies ist zwar bevorzugt aber nicht zwingend erforderlich. Das Stützelement 18 sollte jedoch bevorzugt den freien Querschnitt des Hutprofils 15 in der vertikalen Richtung ausfüllen. Zudem sollte das Stützelement 18 bevorzugt nach unten gegenüber dem Hutprofil 15 vorstehen, so dass das Stützelement 18 auf dem Querträger 8 aufliegt und das Hutprofil 15 in vertikaler Richtung von dem Querträger 8 beabstandet ist. Dieser Abstand D beträgt wenigstens 1 mm, vorzugsweise wenigstens 2 mm, insbesondere wenigstens 4 mm. Die Druckkräfte werden so von dem Ladeboden 2 über den Boden des Hutprofils 15 in das Stützelement 18 eingeleitet, durch das Stützelement 18 hindurchgeleitet und von dem Stützelement 18 auf den Querträger 8 abgeleitet. Das Stützelement 18 umgreift den Querträger 8 dabei vorzugsweise formschlüssig mit seitlichen Vorsprüngen 19, die über den Obergurt 16 des Querträgers 8 hinaus nach unten ragen.

### Bezugszeichenliste

- 1: Chassis
- 2: Ladeboden
- 3: hinteres Ende
- 4: vorderes Ende
- 5: Seitenrand
- 6: Längsträger
- 7: Bodenrandelement
- 8: Querträger
- 9: zentraler Abschnitt
- 10: Randabschnitt
- 11: Ausnehmung
- 12,13: Verbindungskonsolen
- 14: Hilfslangträger
- 15: Hutprofil
- 16,17: Obergurt
- 18: Stützelement
- 19: Vorsprung
- A: Nutzfahrzeugaufbau
- \D: Abstand
- F: Fahrwerk
- FR: Fahrtrichtung
- LR: Längsrichtung
- QR: Querrichtung
- L: Laderaum
- N: Nutzfahrzeug
- W: Seitenwand
- Z: Zugmaschine

## Patentansprüche

1. Chassis (1) eines Nutzfahrzeugs (N), insbesondere Lastkraftwagens, Anhängers oder Sattelaufliegers, mit einem vorderen Ende (4), einem hinteren Ende (3) und zwei Seitenrändern (5), wobei wenigstens zwei sich wenigstens im Wesentlichen in Fahrtrichtung (FR) erstreckende Längsträger (6) vorgesehen sind, wobei wenigstens ein sich quer zur Fahrtrichtung (FR) erstreckender Querträger (8) vorgesehen ist, wobei sich der wenigstens eine Querträger (8) von einem zentralen Abschnitt (9) zwischen den wenigstens zwei Längsträgern (6) bis in wenigstens einen Randabschnitt (10) zwischen einem Seitenrand (5) und dem dem Seitenrand (5) zugeordneten Längsträger (6) erstreckt, wobei der wenigstens eine Querträger (8) von dem zentralen Abschnitt (9) in den Randabschnitt (10) wenigstens teilweise durch eine Ausnehmung (11) des dem Randabschnitt (10) zugeordneten Längsträgers (6) hindurchgreift,
**dadurch gekennzeichnet, dass**
die über die Längserstreckung des wenigstens einen Querträgers (8) im Randabschnitt (10) gemittelte Höhe des wenigstens einen Querträgers (8) im Randabschnitt (10) oberhalb der über die Längserstreckung des wenigstens einen Querträgers (8) im zentralen Abschnitt (9) gemittelte Höhe des Querträgers (8) im zentralen Abschnitt (9) angeordnet ist.

2. Chassis nach Anspruch 1,
**dadurch gekennzeichnet, dass**
die Höhe des wenigstens einen Querträgers (8) im Randabschnitt (10) angrenzend zu dem dem Randabschnitt (10) zugeordneten Längsträger (6) niedriger angeordnet ist als die über die Längserstreckung des wenigstens einen Querträgers (8) im Randabschnitt (10) gemittelte Höhe des wenigstens einen Querträgers (8) im Randabschnitt (10) und/oder dass die Höhe des wenigstens einen Querträgers (8) im zentralen Abschnitt (9) angrenzend zu dem dem Randabschnitt (10) zugeordneten Längsträger (6) höher angeordnet ist als die über die Längserstreckung des wenigstens einen Querträgers (8) im zentralen Abschnitt (9) gemittelte Höhe des wenigstens einen Querträgers (8) im zentralen Abschnitt (9).

3. Chassis nach Anspruch 1 oder 2,
**dadurch gekennzeichnet, dass**
der wenigstens eine Querträger (8) im Randabschnitt (10) angrenzend zu dem dem Randabschnitt (10) zugeordneten Längsträger (6) in Richtung des dem Randabschnitt (10) zugeordneten Längsträgers (6) gesehen, insbesondere mit einer stetigen Krümmung, nach unten gebogen ist und/oder dass der wenigstens eine Querträger (8) im zentralen Abschnitt (9) angrenzend zu dem dem Randabschnitt (10) zugeordneten Längsträger (6) in Richtung des dem Randabschnitt (10) zugeordneten Längsträgers (6) gesehen, insbesondere mit einer stetigen Krümmung, nach oben gebogen ist.

4. Chassis nach einem der Ansprüche 1 bis 3,
**dadurch gekennzeichnet, dass**
der obere Rand des wenigstens einen Querträgers (8) im zentralen Abschnitt (9) wenigstens im Wesentlichen unterhalb des oberen Rands wenigstens eines der Längsträger (6) angrenzend zum wenigstens einen Querträger (8) angeordnet ist und/oder dass der obere Rand des wenigstens einen Querträgers (8) im Randabschnitt (10) wenigstens abschnittweise wenigstens im Wesentlichen auf derselben Höhe wie der obere Rand wenigstens eines der Längsträger (6) angrenzend zum wenigstens einen Querträger (8) angeordnet ist.

5. Chassis nach einem der Ansprüche 1 bis 4,
**dadurch gekennzeichnet, dass**
der obere Rand des wenigstens einen Querträgers (8) wenigstens im Wesentlichen aus einem Obergurt (16) des Querträgers (8) gebildet wird und/oder dass der obere Rand des wenigstens einen Längsträgers (6) wenigstens im Wesentlichen aus einem Obergurt (17) des Längsträgers (6) gebildet wird.

6. Chassis nach einem der Ansprüche 1 bis 5,
**dadurch gekennzeichnet, dass**
wenigstens ein Ende des wenigstens einen Querträgers (8) mit einem Bodenrandelement (7), insbesondere einem Bodenrahmenprofil, verbunden, insbesondere verschraubt, ist und/oder dass der wenigstens eine Querträger (8) mit wenigstens einem Längsträger (6), insbesondere über eine Verbindungskonsole (13), verschraubt ist.

7. Chassis nach einem der Ansprüche 1 bis 6,
**dadurch gekennzeichnet, dass**
der wenigstens eine Querträger (8) wenigstens im Wesentlichen als I-Profil ausgebildet ist und/oder dass der Querschnitt des wenigstens einen Querträgers (8) wenigstens im Wesentlichen in Form eines Doppel-T-Trägers ausgebildet ist.

8. Chassis nach einem der Ansprüche 1 bis 7,
**dadurch gekennzeichnet, dass**
auf dem wenigstens einen Querträger (8), insbesondere auf dem oberen Rand des Querträgers (8), im zentralen Abschnitt (9) wenigstens ein sich wenigstens im Wesentlichen in Fahrtrichtung (FR) erstreckender Hilfslangträger (14) aufliegt und dass, vorzugsweise, der obere Rand des wenigstens einen Hilfslangträgers (14) wenigstens abschnittsweise wenigstens im Wesentlichen auf derselben Höhe angeordnet ist wie der in Querrichtung (QR) neben dem Abschnitt des Hilfslangträgers (14) angeordnete Abschnitt wenigstens eines Längsträgers (6).

9. Chassis nach Anspruch 8,
**dadurch gekennzeichnet, dass**
der wenigstens eine Hilfslangträger (14) wenigstens im Wesentlichen als offenes Profil ausgebildet ist und dass, vorzugsweise, der wenigstens eine Hilfslangträger (14) wenigstens im Wesentlichen als, insbesondere nach unten offenes, Hutprofil (15) ausgebildet ist.

10. Chassis nach Anspruch 8 oder 9,
**dadurch gekennzeichnet, dass**
im wenigstens einen Hilfslangträger (14) im Bereich des wenigstens einen Querträgers (8) ein den freien Querschnitt des wenigstens einen Hilfslangträgers (14) in vertikaler Richtung auffüllendes Stützelement (18) zum Übertragen von Druckkräften eines auf dem wenigstens einen Hilfslangträger (14) aufliegenden Ladebodens (2) auf den wenigstens einen Querträger (8) vorgesehen ist und dass, vorzugsweise, das Stützelement (18) gegenüber dem Hilfslangträger (14) nach unten und/oder nach oben vorsteht.

11. Chassis nach Anspruch 10,
**dadurch gekennzeichnet, dass**
der Ladeboden (2) auf dem Stützelement (18) aufliegt und von dem Hilfslangträger (14) vertikal beabstandet ist und/oder dass das Stützelement (18) auf dem wenigstens einen Querträger (8) aufliegt und der Querträger (8) von dem Hilfslangträger (14) vertikal beabstandet ist.

12. Chassis nach einem der Ansprüche 8 bis 11,
**dadurch gekennzeichnet, dass**
das Stützelement (18) aus einem Kunststoff und/oder Holz gebildet ist und/oder dass der Hilfslangträger (14) aus einem Blech, insbesondere aus Stahl, umgeformt ist.

13. Chassis nach einem der Ansprüche 1 bis 12,
**dadurch gekennzeichnet, dass**
ein Ladeboden (2) vorgesehen ist und dass der Ladeboden (2) auf dem Bodenrahmenprofil (7), dem wenigstens einen Querträger (8), wenigstens einem Längsträger (6) und/oder dem wenigstens einen Hilfslangträger (14) aufliegt.

14. Chassis nach Anspruch 13,
**dadurch gekennzeichnet, dass**
der Ladeboden (2) im Randabschnitt (10) auf dem wenigstens einen Querträger (8) aufliegt.

## Claims

1. Chassis (1) of a commercial vehicle (N), in particular truck, trailer or semi-trailer, with a front end (4), a rear end (3) and two side edges (5), wherein at least two longitudinal members (6) extending at least substantially in the direction of travel (FR) are provided, wherein at least one transverse member (8) extending transversely to the direction of travel (FR) is provided, wherein the at least one transverse member (8) extends from a central section (9) between the at least two longitudinal members (6) into at least one edge section (10) between a side edge (5) and the longitudinal member (6) assigned to the side edge (5), wherein the at least one transverse member (8) engages from the central section (9) into the edge section (10) at least partially through a recess (11) of the longitudinal member (6) assigned to the edge section (10), **characterised in that** the height of the at least one transverse member (8) in the edge section (10) averaged over the longitudinal extension of the at least one transverse member (8) in the edge section (10) is arranged higher the height of the transverse member (8) in the central section (9) averaged over the longitudinal extension of the at least one transverse member (8) in the central section (9).

2. Chassis according to claim 1, **characterised in that** the height of the at least one transverse member (8) in the edge section (10) adjacent to the longitudinal member (6) assigned to the edge section (10) is arranged lower than the height of the at least one transverse member (8) in the edge section (10) averaged over the longitudinal extension of the at least one transverse member (8) in the edge section (10) and/or **in that** the height of the at least one transverse member (8) in the central section (9) adjacent to the longitudinal member (6) assigned to the edge section (10) is arranged higher than the height of the at least one transverse member (8) in the central section (9) averaged over the longitudinal extension of the at least one transverse member (8) in the central section (9).

3. Chassis according to claim 1 or 2, **characterised in that** the at least one transverse member (8) is bent downwards, in particular with a continuous curvature, in the edge section (10) adjacent to the longitudinal member (6) assigned to the edge section (10) viewed in the direction of the longitudinal member (6) assigned to the edge section (10) and/or **in that** the at least one transverse member (8) is bent upwards, in particular with a continuous curvature, in the central section (9) adjacent to the longitudinal member (6) assigned to the edge section (10) viewed in the direction of the longitudinal member (6) assigned to the edge section (10).

4. Chassis according to any one of claims 1 to 3, **characterised in that** the upper edge of the at least one transverse member (8) in the central section (9) is arranged at least substantially below the upper edge of at least one of the longitudinal members (6) adjacent to the at least one transverse member (8) and/or **in that** the upper edge of the at least one transverse member (8) in the edge section (10) is arranged at least in sections at least substantially at the same height as the upper edge of at least one of the longitudinal members (6) adjacent to the at least one transverse member (8).

5. Chassis according to any one of claims 1 to 4, **characterised in that** the upper edge of the at least one transverse member (8) is formed at least substantially from an upper flange (16) of the transverse member (8) and/or **in that** the upper edge of the at least one longitudinal member (6) is formed at least substantially from an upper flange (17) of the longitudinal member (6).

6. Chassis according to any one of claims 1 to 5, **characterised in that** at least one end of the at least one transverse member (8) is connected, in particular screwed, to a floor edge element (7), in particular a floor frame profile, and/or **in that** the at least one transverse member (8) is screwed to at least one longitudinal member (6), in particular via a connection console (13).

7. Chassis according to any one of claims 1 to 6, **characterised in that** the at least one transverse member (8) is designed at least substantially as an I-profile and/or **in that** the cross-section of the at least one transverse member (8) is designed at least substantially in the form of a double T-member.

8. Chassis according to any one of claims 1 to 7, **characterised in that** at least one auxiliary longitudinal member (14) extending at least substantially in the direction of travel (FR) rests on the at least one transverse member (8), in particular on the upper edge of the transverse member (8), in the central section (9) and **in that**, preferably, the upper edge of the at least one auxiliary longitudinal member (14) is arranged at least in sections at least substantially at the same height as the section of at least one longitudinal member (6) arranged next to the section of the auxiliary longitudinal member (14) in the transverse direction (QR).

9. Chassis according to claim 8, **characterised in that** the at least one auxiliary longitudinal member (14) is designed at least substantially as an open profile and **in that**, preferably, the at least one auxiliary longitudinal member (14) is designed at least substantially as a cap profile (15), in particular open downwards.

10. Chassis according to claim 8 or 9, **characterised in that** in the at least one auxiliary longitudinal member (14) in the region of the at least one transverse member (8), a support element (18) filling the free cross-section of the at least one auxiliary longitudinal member (14) in the vertical direction is provided for transferring compressive forces of a loading floor (2) resting on the at least one auxiliary longitudinal member (14) to the at least one transverse member (8) and **in that**, preferably, the support element (18) projects downwards and/or upwards with respect to the auxiliary longitudinal member (14).

11. Chassis according to claim 10, **characterised in that** the loading floor (2) rests on the support element (18) and is spaced vertically from the auxiliary longitudinal member (14) and/or **in that** the support element (18) rests on the at least one transverse member (8) and the transverse member (8) is spaced vertically from the auxiliary longitudinal member (14).

12. Chassis according to any one of claims 8 to 11, **characterised in that** the support element (18) is formed from a plastic and/or wood and/or **in that** the auxiliary longitudinal member (14) is formed from a sheet metal, in particular from steel.

13. Chassis according to any one of claims 1 to 12, **characterised in that** a loading floor (2) is provided and **in that** the loading floor (2) rests on the floor frame profile (7), the at least one transverse member (8), at least one longitudinal member (6) and/or the at least one auxiliary longitudinal member (14).

14. Chassis according to claim 13, **characterised in that** the loading floor (2) rests in the edge section (10) on the at least one transverse member (8).

## Revendications

1. Châssis (1) d'un véhicule utilitaire (N), notamment un poids lourd, une remorque ou semi-remorque, avec une extrémité avant (4), une extrémité arrière (3) et deux bords latéraux (5), au moins deux longerons (6) s'étendant au moins essentiellement dans le sens de marche (FR) étant prévus, au moins une traverse (8) s'étendant transversalement par rapport au sens de marche (FR) étant prévue, ladite au moins une traverse (8) s'étendant depuis une section centrale (9) entre lesdits au moins deux longerons (6) jusque dans au moins une section de bord (10) entre un bord latéral (5) et le longeron (6) associé au bord latéral (5), ladite au moins une traverse (8) s'engageant depuis la section centrale (9) dans la section de bord (10) au moins partiellement à travers un évidement (11) du longeron (6) associé à la section de bord (10), **caractérisé en ce que** la hauteur de ladite au moins une traverse (8) dans la section de bord (10), moyennée sur l'extension longitudinale de ladite au moins une traverse (8) dans la section de bord (10), est agencée au-dessus de la hauteur de la traverse (8) dans la section centrale (9), moyennée sur l'extension longitudinale de ladite au moins une traverse (8) dans la section centrale (9).

2. Châssis selon la revendication 1, **caractérisé en ce que** la hauteur de ladite au moins une traverse (8) dans la section de bord (10) adjacente au longeron (6) associé à la section de bord (10) est agencée plus bas que la hauteur de ladite au moins une traverse (8) dans la section de bord (10), moyennée sur l'extension longitudinale de ladite au moins une traverse (8) dans la section de bord (10), et/ou **en ce que** la hauteur de ladite au moins une traverse (8) dans la section centrale (9), adjacente au longeron (6) associé à la section de bord (10), est agencée plus haut que la hauteur de ladite au moins une traverse (8) dans la section centrale (9), moyennée sur l'extension longitudinale de ladite au moins une traverse (8) dans la section centrale (9).

3. Châssis selon la revendication 1 ou 2, **caractérisé en ce que** ladite au moins une traverse (8) dans la section de bord (10) adjacente au longeron (6) associé à la section de bord (10) est courbée vers le bas, notamment avec une courbure continue, vu en direction du longeron (6) associé à la section de bord (10) et/ou **en ce que** la dite au moins une traverse (8) dans la section centrale (9) adjacente au longeron (6) associé à la section de bord (10) est courbée vers le haut, notamment avec une courbure continue, vu en direction du longeron (6) associé à la section de bord (10).

4. Châssis selon l'une des revendications 1 à 3, **caractérisé en ce que** le bord supérieur de ladite au moins une traverse (8) est agencé dans la section centrale (9) au moins sensiblement en dessous du bord supérieur d'au moins un des longerons (6) adjacent à ladite au moins une traverse (8) et/ou **en ce que** le bord supérieur de ladite au moins une traverse (8) est agencé dans la section de bord (10), au moins partiellement, au moins sensiblement, à la même hauteur que le bord supérieur d'au moins un des longerons (6) adjacent à ladite au moins une traverse (8).

5. Châssis selon l'une des revendications 1 à 4, **caractérisé en ce que** le bord supérieur de ladite au moins une traverse (8) est formé, au moins sensiblement, par une membrure supérieure (16) de ladite traverse (8) et/ou **en ce que** le bord supérieur dudit au moins un longeron (6) est formé, au moins sensiblement, par une membrure supérieure (17) dudit longeron (6).

6. Châssis selon l'une des revendications 1 à 5, **caractérisé en ce qu'**au moins une extrémité de ladite au moins une traverse (8) est reliée, notamment vissée, à un élément de bord de plancher (7), notamment un profilé de châssis de plancher, et/ou **en ce que** ladite au moins une traverse (8) est vissée à au moins un longeron (6), notamment par l'intermédiaire d'une console de jonction (13).

7. Châssis selon l'une des revendications 1 à 6, **caractérisé en ce que** ladite au moins une traverse (8) est conçue au moins sensiblement sous la forme d'un profilé en I et/ou **en ce que** la section transversale de ladite au moins une traverse (8) est conçue au moins sensiblement sous la forme d'un support double en T.

8. Châssis selon l'une des revendications 1 à 7, **caractérisé en ce qu'**un longeron auxiliaire (14) s'étendant au moins sensiblement dans le sens de marche (FR) repose dans la partie centrale (9) sur ladite au moins une traverse (8), notamment sur le bord supérieur de la traverse (8), et **en ce que**, de préférence, le bord supérieur de l'au moins un longeron auxiliaire (14) est agencé, au moins partiellement, au moins sensiblement, à la même hauteur que la section d'au moins un longeron (6) agencée à côté de la section du longeron auxiliaire (14) en direction transversale (QR).

9. Châssis selon la revendication 8, **caractérisé en ce que** ledit au moins un longeron auxiliaire (14) est conçu, au moins sensiblement, sous forme de profilé ouvert et **en ce que**, de préférence, ledit au moins un longeron auxiliaire (14) est conçu, au moins sensiblement, sous forme de profilé de type chapeau (15), notamment ouvert vers le bas.

10. Châssis selon la revendication 8 ou 9, **caractérisé en ce que** l'on prévoit dans au moins un longeron auxiliaire (14), dans la zone de l'au moins une traverse (8), un élément de support (18) remplissant la section transversale libre de l'au moins un longeron auxiliaire (14) en direction verticale pour transmettre des forces de pression d'un plancher de chargement (2) reposant sur l'au moins un longeron auxiliaire (14) à au moins une traverse (8) et **en ce que**, de préférence, l'élément de support (18) fait saillie vers le bas et/ou vers le haut par rapport au longeron auxiliaire (14).

11. Châssis selon la revendication 10, **caractérisé en ce que** le plancher de chargement (2) repose sur l'élément de support (18) et est espacé verticalement du longeron auxiliaire (14) et/ou **en ce que** l'élément de support (18) repose sur ladite au moins une traverse (8) et la traverse (8) est espacée verticalement du longeron auxiliaire (14).

12. Châssis selon l'une des revendications 8 à 11, **caractérisé en ce que** l'élément de support (18) est formé en une matière plastique et/ou en bois et/ou **en ce que** le longeron auxiliaire (14) est formé par une tôle, notamment en acier.

13. Châssis selon l'une des revendications 1 à 12, **caractérisé en ce que** l'on prévoit un plancher de chargement (2) et **en ce que** le plancher de chargement (2) repose sur le profilé de châssis de plancher (7), sur ladite au moins une traverse (8), sur au moins un longeron (6) et/ou sur ledit au moins un longeron auxiliaire (14).

14. Châssis selon la revendication 13, **caractérisé en ce que** le plancher de chargement (2) repose dans la section de bord (10) sur ladite au moins une traverse (8).
